Europäisches Patentamt

(19) European Patent Office

Office européen des brevets

(11) Publication number: **0 104 706**
**B1**

## (12) EUROPEAN PATENT SPECIFICATION

(45) Date of publication of patent specification: **19.03.86**

(21) Application number: **83201359.3**

(22) Date of filing: **23.09.83**

(51) Int. Cl.⁴: **C 05 G 1/00,** C 05 D 1/00, C 05 C 1/00

(54) Process for preparing granular compound fertilizers showing stability in storage.

(30) Priority: **25.09.82 NL 8203722**

(43) Date of publication of application:
**04.04.84 Bulletin 84/14**

(45) Publication of the grant of the patent:
**19.03.86 Bulletin 86/12**

(84) Designated Contracting States:
**AT BE DE FR GB IT NL SE**

(56) References cited:
**EP-A-0 007 132**
**FR-A- 514 467**
**GB-A-1 026 421**
**GB-A-1 183 938**
**GB-A-1 225 976**
**GB-A-1 272 710**
**NL-A-6 605 153**

(73) Proprietor: **UNIE VAN KUNSTMESTFABRIEKEN B.V.**
**Maliebaan 81**
**NL-3581 CG Utrecht (NL)**

(72) Inventor: **Watson, Ian Kendall**
**49, The Rock Helsby**
**via Washington Cheshire WA6 9AS (GB)**
Inventor: **Bohte, Hermanus Johannes**
**Amatist 59**
**NL-1703 AR Heerhugowaard (NL)**

(74) Representative: **Roeffen, Wilhelmus Johannes Maria et al**
**OCTROOIBUREAU DSM Postbus 9**
**NL-6160 MA Geleen (NL)**

Courier Press, Leamington Spa, England.

## Description

The invention relates to a process for preparing granular compound fertilizers, in which process solid potassium chloride is mixed with an ammonium nitrate solution or melt, and the mixture is subsequently granulated, optionally together with other substances.

Such a process is known and is applied in the fertilizer industry on a large scale.

A problem occurring in the preparation of such fertilizers is that the potassium chloride and the ammonium nitrate react with each other while forming ammonium chloride and potassium nitrate. This reaction not only occurs during the mixing and granulation, but also in the granules already formed. During storage the crystal changes occurring in the granules in consequence of this after-reaction cause a number of undesired phenomena, such as a decrease in crushing strength, surface cracking, efflorescence of salts on the surface, resulting in the formation of dust and in an increase of fine particles and caking of individual granules.

It is possible in principle to suppress the reaction between the ammonium nitrate and potassium chloride wholly or largely by applying a non-reactive potassium chloride and/or a starting mixture having an extremely low water content. This method, however, is hardly attractive on account of the high cost of this non-reactive potassium chloride, for instance coated in a special manner and the undesirable side effects this cooling has on the granulation process. Further the preparation of a practically anhydrous mixture, also involves relatively high costs.

Another method frequently used to wholly or largely obviate the problem of crystal changes in the granules during storage is to take care that during the granule preparation step a virtually 100% conversion takes place either of potassium chloride, if an excess of ammonium nitrate is present, or of ammonium nitrate, if an excess of potassium chloride has been used. This can be achieved, for instance, by using finely ground potassium chloride, as described in the European patent specification 7.132, or by increasing the reaction time of the starting components, particularly by premixing the ammonium nitrate and potassium chloride in a separate mixing device before supplying them to the granulator. Such a process is described, for instance, in Paper TA/80/12 presented at the ISMA Conference in Vienna (11th—13th November 1980).

Although this last-mentioned process generally produces ammonium nitrate- and potassium chloride-based granular compound fertilizers showing stability in storage, it has been found that a number of fertilizer compositions will yet present problems in the storage of the granules. Particularly in compositions having an ammonium nitrate/potassium chloride molar ratio of between 1.2:1 and 3.0:1 there will be a number of undesired phenomena in the storage of the granules, such as disintegration of the granules, a rise in temperature and increase in plasticity and caking of the granules.

The invention now provides a process for preparing granular compound fertilizers showing stability in storage by mixing solid potassium chloride in a mixing zone with an ammonium nitrate solution or melt and subsequently granulating the mixture formed in a granulating zone, optionally while adding other substances, without producing the said undesired phenomena in the storage of the granular product.

This is achieved according to the invention in that only part of the ammonium nitrate is added to the mixing zone and the balance is supplied to the granulating zone.

Preference is given to adding such a quantity of ammonium nitrate to the mixing zone that the mixture formed has an $NH_4NO_3:KCl$ molar ratio $\leq 1.2:1$ and $\geq 1.0:1$, specifically about 1:1. The process according to the invention is of particular importance for the preparation of mixed fertilizers in which the $NH_4NO_3:KCl$ molar ratio is 1.2:1 to 3.0:1.

In the present process both ground and unground technical-grade or chemically pure potassium chloride can be used. It has been found that the use of chemically pure potassium chloride is less attractive, because this will result in a mixture having increased viscosity. The advantage of using ground potassium chloride is that in that case a relatively short residence time in the mixing zone will suffice. When mixing times are too long, there is a danger of a very viscous slurry being formed, so that the granulation will be more difficult or unsatisfactory. Thus it has been found that, when using potassium chloride ground to a particle size <100 μm, with an average particle size of about 50 μm, a residence time of about 2 seconds in the mixing zone will suffice. A disadvantage is that the grinding of potassium chloride is a relatively expensive process.

The disadvantage of using unground technical-grade potassium chloride, for instance having a d 50 of 150—250 μm, is that this process requires relatively long residence times in the mixing zone, for instance 0.5—3 minutes.

The potassium chloride can be fed to the mixing zone at both ambient temperature and pre-heated. The latter has the advantage that the conversion with ammonium nitrate will then proceed more rapidly.

The temperature in the mixing zone may vary and is generally determined by the temperature of the KCl and $NH_4NO_3$ supplied. As indicated earlier, the KCl can be supplied at ambient temperature, as well as pre-heated, for instance to 80°C. Preference is given to supplying the $NH_4NO_3$ direct as solution or melt from an $NH_4NO_3$ plant at a temperature of between about 140 and 180°C, so that the resulting temperature in the mixing zone is between 110 and 150°C. It has been found that, in order to obtain a stable finished product, it may be important for potassium nitrate crystals to crystallize in the slurry in the mixing zone. This can be achieved by cooling this mixing zone, if necessary, for instance to 120°C.

As mixing zone various apparatuses known as such can be used, for instance one or more stirred reactors, or one more static jet mixers, or one or more mixing vessels equipped with rotors provided with blades.

The mixture formed in the mixing zone is subsequently supplied to a granulating zone, to which the balance of the ammonium nitrate and optionally other fertilizer components, for instance ammonium phosphate, and/or other substances, are supplied as well. It has been found that in the addition of ammonium phosphate to the granulating zone the feeding place influences the stability of the granules. Preference is given to supplying the ammonium phosphate to the granulating zone before the ammonium nitrate feeding place but after the feeding place of the mixture from the mixing zone, as seen in the direction of flow of the mixture to be granulated. As granulating zone, various granulators known as such can be used, specially agglomeration-granulation devices, such as a blunger or pugmill, drum or pan.

The product from this granulating zone is then treated further in a manner known as such, for instance dried, screened, cooled and optionally coated with an anticaking agent.

The invention is further elucidated in the following examples without, however, being limited thereby.

Example I

To a mixing vessel equipped with two rotors provided with blades 140 kg/hour solid potassium chloride and 147 kg/hour of a 95 %-(wt) ammonium nitrate solution were supplied continuously ($NH_4NO_3$:KCl molar ratio about 1:1). The potassium chloride used was a technical-grade product having an average particle size of about 240 μm. The temperature of the potassium chloride and of the ammonium nitrate supplied was about 23°C and 160°C respectively. The temperature in the mixing vessel was about 120°C and the residence time of the reactants in this zone about 15—20 seconds.

The slightly viscous liquid mixture formed in the mixing vessel was subsequently passed to a twin shafted blunger to which 425 kg/hour solid recycle material (see below) having a temperature of about 65°C was supplied continuously as well. To this blunger 105 kg/hour of a 95%-(wt) ammonium nitrate solution (temperature 160°C) was also supplied.

The average residence time of the components in the blunger was about 15 seconds.

The granules formed were subsequently transported from the blunger (exit temperature about 83°C), dried to a moisture content of about 0.2% (m/m) and subsequently screened into a fraction smaller than 2 mm, a product fraction of 2—4 mm, and a fraction larger than 4 mm, which last-mentioned fraction was crushed. The fraction smaller than 2 mm and the crushed fraction were returned to the blunger as solid recycle material.

The product granules were stored in bulk in a shed and showed no caking even after three months' storage. The granules were not plastic and no temperature rise occurred in the stored granules. The product (N, $P_2O_5$, $K_2O$ content 22-0-22) could be conveyed and stored without powdering.

Comparative Example A

In the same way as in Example I, unground technical-grade KCl (temperature about 22°C) and a 95%-(wt) $NH_4NO_3$ solution (temperature about 155°C) were supplied continuously in quantities of, respectively, 110 kg/hour and 199 kg/hour ($NH_4NO_3$:KCl molar ratio about 1.7:1) to a mixing vessel. After a residence time of about 2.5 minutes the lightly viscous liquid mixture was passed to a blunger, to which also about 600 kg/hour solid material (see below) having a temperature of about 56°C was supplied. The average residence time in the blunger was about 15 seconds, after which the granules (temperature about 80°C) were transported away, dried to a moisture content of about 0.2% (wt) and screened into a product fraction of 2—4 mm, an undersize fraction and an oversize fraction. This oversize fraction was crushed and returned to the blunger together with the undersize fraction. The product fraction was stored in bulk in a shed.

Already after 14 days' storage the product was found to be caked to such a degree that it could practically no longer be easily removed from store. The granules showed a high degree of plasticity. Moreover, a distinct development of heat could be observed in the stored product.

Example II

In the same way as in Example I, unground technical-grade KCl (temp. 24°C) and a 95%-(wt) $NH_4NO_3$ solution (temp. 159°C) were supplied continuously in quantities of, respectively, 130 kg/hour and 137 kg/hour ($NH_4NO_3$:KCl molar ratio about 1:1) to a mixing vessel. The temperature in this vessel was about 122°C, and the residence time of the reactants about 15 sec.

Subsequently the liquid mixture formed was passed to a blunger, to which 1500 kg/hour solid recycle material (temp. about 77°C) was supplied as well. From a pipe reactor an ammonium phosphate slurry having an N:P ratio of 1.0 was metered to the blunger in a quantity of 142 kg/hour. Further down 53 kg/hour of the 95%-(wt) $NH_4NO_3$ solution was supplied to the blunger. The average residence time of the components in the blunger was about 20 seconds. The granules formed were transported away (temp. about 90°C), dried to a moisture content of about 0.6% (wt) and subsequently screened. The resulting screened fraction larger than 4 mm was crushed and returned to the blunger together with the resulting screened fraction smaller than 2 mm.

The product fraction obtained ($N-P_2O_5-K_2O$ content 17-17-17) was stored in bulk. Even after several weeks' storage the product showed hardly any caking. The granules were non-plastic and there was hardly any development of heat in the stored product.

Comparative Example B
The process of Example II was repeated on the basis that the total quantity of $NH_4NO_3$ solution (190 kg/hour) was added to the mixing vessel ($NH_4NO_3$:KCl molar ratio about 1.3:1). The temperature in the mixing zone was about 123°C, the temperature of the granules from the blunger about 85°C and the temperature of the solid material returned to the blunger about 55°C.

The resulting product granules were stored in bulk and already after two weeks they showed rather substantial caking and plasticity. Moreover, a temperature rise in the product could be clearly observed.

Comparative Example C
The process of Example B was repeated on the basis that the ammonium phosphate slurry was metered to the mixing point. The granular product so made was found to be so seriously caked after storage that it could no longer be removed from store with any facility.

**Claims**

1. Process for preparing granular compound fertilizers showing stability in storage and containing ammonium nitrate and potassium chloride by mixing solid potassium chloride in a mixing zone with an ammonium nitrate solution or melt and subsequently granulating the mixture in a granulating zone optionally while adding other substances, characterized in that only part of the ammonium nitrate is added to the mixing zone and the balance is supplied to the granulating zone.

2. Process according to claim 1, characterized in that the quantity of ammonium nitrate added to the mixing zone is such that the $NH_4NO_3$:KCl molar ratio of the mixture formed is ≤1.2:1 and ≥1.0:1.

3. Process according to claim 1 or 2, characterized in that a mixed fertilizer is prepared in which the $NH_4NO_3$:KCl molar ratio is 1.2:1 to 3.0:1.

4. Process according to any one of claims 1—3, in which process ammonium phosphate, too, is supplied to the granulating zone, characterized in that the ammonium phosphate is supplied before the ammonium nitrate feeding place and after the feeding place of the mixture from the mixing zone, as seen in the direction of flow of the mixture to be granulated.

5. Process according to any one of claims 1—4, characterized in that as granulating zone an agglomeration-granulation device is used.

Patentansprüche

1. Verfahren zum Bereiten von granulierten Düngermischungen welche lagerbeständig sind und Ammoniumnitrat und Kaliumchlorid enthalten, durch Vermischen von festem Kaliumchlorid in einer Mischzone mit einer Ammoniumnitratlösung oder -schmelze und anschließendes Granulieren des Gemisches in einer Granulierzone, gegebenenfalls unter Zustaz anderer Substanzen, dadurch gekennzeichnet, daß nur ein Teil des Ammoniumnitrets der Mischzone zugesetzt und der Rest der Granulierzone zugeführt wird.

2. Verfahren nach Anspruch 1, dadurch gekennzeichnet, daß der Mischzone eine solche Menge Ammoniumnitrat zugesetzt wird, daß das molare Verhältnis $NH_4NO_3$:KCl in dem gebildeten Gemisch ≤1,2:1 und ≥1,0:1 ist.

3. Verfahren nach Anspruch 1 oder 2, dadurch gekennzeichnet, daß ein Mischdünger hergestellt wird, in welchem das molare Verhältnis $NH_4NO_3$:KCl 1,2:1 bis 3,0:1 ist.

4. Verfahren nach einem der Ansprüche 1—3, bei welchem Verfahren der Granulierzone auch Ammoniumphosphat zugeführt wird, dadurch gekennzeichnet, daß das Ammoniumphosphat vor der Beschickungsstelle des Ammoniumnitrats und nach der Beschickungsstelle des Gemisches aus der Mischzone, gesehen in Fließrichtung des zu granulierenden Gemisches, zugeführt wird.

5. Verfahren nach einem der Ansprüche 1—4, dadurch gekennzeichnet, daß als Granulierzone eine Agglomerierungs-Granulierungsvorrichtung verwendet wird.

**Revendications**

1. Procédé de préparation d'engrais granulaires combinés faisant preuve de stabilité au stockage et contenant du nitrate d'ammonium et du chlorure de potassium, en mélangeant le chlorure de potassium solide dans une zone de mélange avec une solution ou masse fondue de nitrate d'ammonium et ensuite en granulant le mélange dans une zone de granulation, tout en ajoutant facultativement d'autres substances, caractérisé en ce qu'on n'introduit qu'une partie du nitrate d'ammonium dans la zone de mélange et on admet le complément dans la zone de granulation.

2. Procédé selon la revendication 1, caractérisé en ce que la quantité du nitrate d'ammonium qu'on introduit dans la zone de mélange est telle que le rapport molaire $NH_4NO_3$/KCl du mélange formé est plus petit que 1,2:1 et plus grand que 1,0:1.

3. Procédé selon la revendication 1 ou 2, caractérisé en ce qu'on prépare un engrais mixte dans lequel le rapport molaire $NH_4NO_3$/KCl est de 1,2:1 à 3,0:1.

4. Procédé selon l'une quelconque des revendications 1 à 3, dans lequel on fournit également du phosphate d'ammonium à la zone de granulation, caractérisé en ce qu'on fournit le phosphate d'ammonium en amont de l'emplacement d'introduction du nitrate d'ammonium et en aval du point d'enlèvement du mélange de la zone de mélange, en observant le sens d'écoulement du mélange à granuler.

5. Procédé selon l'une quelconque des revendications 1 à 4, caractérisé en ce qu'on utilise comme zone de granulation un dispositif de granulation par agglomération.